# FASCICULE DE BREVET EUROPEEN

(11) **EP 3 380 750 B1**
(45) Date de publication et mention de la délivrance du brevet: **24.07.2019**
(21) Numéro de dépôt: 16801201.1
(22) Date de dépôt: 24.11.2016
(51) Int. Cl.: F16F 15/14

(54) **DISPOSITIF D'AMORTISSEMENT PENDULAIRE**
PENDELDÄMPFUNGSVORRICHTUNG
PENDULUM DAMPING DEVICE

(30) Priorité: 25.11.2015 FR 1561331
(43) Date de publication de la demande: 03.10.2018
(73) Titulaire: Valeo Embrayages, 80009 Amiens Cedex 2 (FR)
(72) Inventeur: VERHOOG, Roel, 60190 Gournay sur Aronde (FR); CAILLERET, Franck, 80009 Amiens Cedex 1 (FR)
(86) Numéro de dépôt international: PCT/EP2016/078633
(87) Numéro de publication internationale: WO 2017/089442

(56) Documents cités:
- WO-A1-2013/156733
- DE-A1- 19 954 274

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple connu sous le nom de double volant amortisseur.

En variante, dans une telle application, le dispositif d'amortissement pendulaire peut être intégré à un disque de friction de l'embrayage ou à un convertisseur de couple hydrodynamique.

Un tel dispositif d'amortissement pendulaire met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Il est connu de choisir le dispositif d'amortissement, par exemple via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant de façon connue le nombre d'explosions de ce moteur par tour de vilebrequin. De tels dispositifs sont très sensibles à la force de gravité, cette dernière pouvant alors causer des déplacements non souhaités des corps pendulaires, et donc affecter les performances de filtrage.

Pour remédier à ce problème, il est par exemple connu de la demande DE 10 2012 221 103 de prévoir des ressorts entre deux corps pendulaires voisins circonférentiellement, de manière à ce que les corps pendulaires ainsi reliés résistent à la force de gravité exercée tour à tour sur ces derniers lorsque le dispositif est animé d'un mouvement de rotation. L'insertion de ces ressorts suppose de ménager des logements additionnels dans les corps pendulaires ou de prévoir des moyens de fixation appropriés sur ces corps pendulaires, ce qui est coûteux et complexe. Du fait de l'insertion des ressorts, une fréquence de résonance additionnelle apparaît par ailleurs. L'insertion des ressorts peut encore nécessiter de ménager des découpes ouvertes dans le support du dispositif, réduisant alors le débattement des corps pendulaires. En outre, il est nécessaire de dimensionner correctement les ressorts et le maintien dans le temps des caractéristiques des ressorts n'est pas garanti.

WO2013/156733 A1 décrit un dispositif d'amortissement pendulaire avec les caractéristiques définies dans le préambule de la revendication indépendante 1.

L'invention a pour objet de réduire l'influence de la gravité sur les corps pendulaires, notamment lorsque ces derniers ont pour but de filtrer l'ordre d'excitation d'un moteur thermique à deux cylindres du véhicule, tout en remédiant à tout ou partie des inconvénients ci-dessus.

L'invention vise à répondre à ce besoin, et elle y parvient, selon l'un de ses aspects, à l'aide d'un dispositif d'amortissement pendulaire, comprenant :
- un support apte à se déplacer en rotation autour d'un axe,
- au moins un corps pendulaire comprenant : une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses, et
- au moins un organe de roulement guidant le déplacement du corps pendulaire par rapport au support, l'organe de roulement coopérant d'une part avec une piste de roulement solidaire du support et d'autre part avec une piste de roulement solidaire du corps pendulaire et définie par l'organe de liaison,
l'organe de roulement exerçant une force de serrage axial sur l'une au moins des masses pendulaires pendant le déplacement de cette dernière par rapport au support.

Selon l'invention, le serrage axial exercé par l'organe de roulement sur la masse pendulaire, et donc sur le corps pendulaire, s'oppose au déplacement de ce corps pendulaire sous l'effet de la gravité et entrave donc l'action de la gravité sur ce corps pendulaire. Lorsque le support tourne, chaque corps pendulaire occupe successivement la position la plus haute autour de l'axe de rotation du support. Le déplacement vers le bas du corps pendulaire le plus haut est ainsi réduit par l'organe de roulement qui exerce sur ce corps pendulaire un serrage axial.

Au sens de la présente demande :
- « axialement » signifie « parallèlement à l'axe de rotation du support » ou « parallèlement à l'axe longitudinal de l'organe de roulement », selon le cas,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos du dispositif est celle dans laquelle les corps pendulaires sont soumis à une force centrifuge, mais non à des oscillations de torsion provenant des acyclismes du moteur thermique.

L'organe de roulement peut exercer une force de serrage axial sur une seule des masses pendulaires du corps pendulaire, pendant le déplacement de ce corps pendulaire par rapport au support.

En variante, l'organe de roulement peut exercer une force de serrage axial sur chaque masse pendulaire du corps pendulaire pendant le déplacement du corps pendulaire par rapport au support. On renforce ainsi l'action exercée par l'organe de roulement sur le corps pendulaire pour entraver l'action de la gravité sur ce corps pendulaire.

Selon un premier exemple de mise en oeuvre de l'invention, l'organe de roulement porte sur l'une au moins de ses faces d'extrémités axiale un élément élastique d'appui axial exerçant un serrage axial sur la masse pendulaire. Ce serrage axial peut s'exercer sur toute l'amplitude du déplacement du corps pendulaire par rapport au support. Selon ce premier exemple, une rondelle peut être montée sur la face d'extrémité axiale de l'organe de roulement et l'élément élastique d'appui axial peut être formé par au moins une patte de cette rondelle. Dans ce cas, la rondelle est reçue dans la face d'extrémité axiale de l'organe de roulement en regard de la masse pendulaire ainsi serrée axialement. La rondelle est par exemple fixée sur l'organe de roulement.

Dans le cas où l'organe de roulement ne serre axialement qu'une seule masse pendulaire du corps pendulaire, cet organe de roulement peut présenter une face d'extrémité axiale de forme différente de celle de son autre face d'extrémité axiale, cette différence de forme étant due à l'accueil de la rondelle sur une seule de ces faces d'extrémité axiale. L'autre face d'extrémité axiale ne vient alors pas en contact avec l'autre masse pendulaire du corps pendulaire.

Dans le cas où l'organe de roulement serre axialement chaque masse pendulaire du corps pendulaire, cet organe de roulement peut porter deux rondelles distinctes, chaque rondelle étant montée sur une face d'extrémité axiale de l'organe de roulement et serrant axialement via sa patte la masse pendulaire du corps pendulaire qui est axialement en regard de cette face d'extrémité axiale.

Dans le cas où l'organe de roulement serre axialement chaque masse pendulaire du corps pendulaire, cet organe de roulement peut présenter une première face d'extrémité axiale accueillant une rondelle serrant axialement via sa patte la masse pendulaire du corps pendulaire qui est axialement en regard de cette première face, et une deuxième face d'extrémité axiale portant une protubérance venant au contact de la masse pendulaire du corps pendulaire qui est axialement en regard de cette deuxième face d'extrémité axiale, de manière à serrer axialement cette masse pendulaire.

Selon ce premier exemple, la rondelle peut être élastiquement déformable, de manière à permettre son montage dans un logement ménagé dans la face d'extrémité axiale de l'organe de roulement. Cette déformation élastique de la rondelle peut se faire dans un plan perpendiculaire à l'axe de rotation de l'organe de roulement, lors du montage de la rondelle dans le logement.

La rondelle est par exemple réalisée en acier allié pour ressort.

Selon ce premier exemple, la rondelle peut comprendre :
- une portion radialement extérieure annulaire s'étendant circonférentiellement, et
- la patte s'étendant depuis la portion radialement extérieure annulaire vers l'intérieur de la rondelle.

La patte peut faire axialement saillie par rapport à la portion radialement extérieure annulaire de la rondelle, au moins avant mise en place de la rondelle sur la face d'extrémité axiale de l'organe de roulement.

La portion radialement extérieure annulaire peut s'étendre de façon continue, c'est-à-dire former un anneau ininterrompu. Il peut s'agir d'une rondelle Belleville.

En variante, la portion radialement extérieure annulaire de la rondelle peut s'étendre de façon discontinue, étant fendue. La fente peut posséder une étendue circonférentielle variable. La fente s'étend par exemple sur un angle mesuré entre ses deux extrémités depuis le centre de la portion extérieure annulaire de la rondelle et qui est compris entre 10° et 120°, étant notamment compris entre 40° et 90°, plus particulièrement compris entre 50° et 70°.

Lorsqu'une telle fente existe, la patte de la rondelle peut être sensiblement rectiligne et avoir son extrémité libre en regard de la fente.

En variante, lorsqu'une telle fente existe, deux pattes distinctes peuvent être définies par la rondelle. La fente s'étend par exemple entre deux retours s'étendant vers l'intérieur de la rondelle depuis sa portion radialement extérieure annulaire, et chaque retour forme une patte.

Selon un deuxième exemple de mise en oeuvre de l'invention, l'organe de roulement est creux de manière à définir un logement dans lequel est reçu un ressort, l'une au moins des extrémités de ce ressort formant l'élément élastique d'appui axial. Ce logement peut être borgne. Une des extrémités du ressort peut être fixée sur la paroi de fond de ce logement borne tandis que l'autre extrémité du ressort fait saillie hors du logement et appuie axialement sur une des masses pendulaires, de manière à exercer le serrage axial précité.

Dans le cas où le serrage axial est exercé par l'organe de roulement sur une seule des masses pendulaires du corps pendulaire, un seul logement borgne peut être ménagé dans l'organe de roulement et un seul ressort est ainsi reçu dans l'organe de roulement.

Dans le cas où l'organe de roulement exerce un serrage axial sur chaque masse pendulaire du corps pendulaire, deux logements borgnes ne communiquant pas entre eux peuvent être ménagés dans l'organe de roulement. Chaque logement borgne peut alors recevoir un ressort ayant une extrémité fixée sur la paroi de fond de ce logement borgne et une autre extrémité faisant saillie hors de ce logement et appuyant axialement sur l'une des masses pendulaires, de manière à exercer le serrage axial précité.

Dans une variante du cas où l'organe de roulement exerce un serrage axial sur chaque masse pendulaire, le logement ménagé dans l'organe de roulement peut être traversant, de sorte que chaque extrémité du ressort reçu dans ce logement forme un élément élastique d'appui axial sur l'une des masses pendulaires respectives du corps pendulaire.

On va maintenant mentionner des caractéristiques pouvant indifféremment s'appliquer à l'un des exemples de mise en oeuvre précités.

Chaque organe de roulement peut coopérer avec la piste de roulement solidaire du support et avec la ou les pistes de roulement solidaires du corps pendulaire uniquement via sa surface extérieure. Ainsi, une même portion de cette surface extérieure peut rouler alternativement sur la piste de roulement solidaire du support et sur une piste de roulement solidaire du corps pendulaire lorsque l'organe de roulement se déplace.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

La forme des premières et des deuxièmes pistes de roulement peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple un nombre compris entre deux et huit, notamment trois ou six corps pendulaires.

Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Comme mentionné précédemment, la piste de roulement solidaire du corps pendulaire est ici définie par l'organe de liaison de ce corps pendulaire. Une portion du contour de cet organe de liaison définit par exemple la deuxième piste de roulement. En variante, un revêtement peut être déposé sur cette portion du contour de l'organe de liaison pour former la deuxième piste de roulement.

Un tel organe de liaison est par exemple emmanché en force via chacune de ses extrémités axiales dans une ouverture ménagée dans une des masses pendulaires. En variante, l'organe de liaison peut être soudé ou vissé via ses extrémités axiales sur chaque masse pendulaire.

Chaque corps pendulaire comprend par exemple deux organes de liaison appariant chaque masse pendulaire de ce corps, chaque organe de liaison étant solidaire de chacune de ces masses pendulaires. Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Chaque organe de roulement peut être reçu dans une fenêtre du support ne recevant aucun autre organe de roulement. Cette fenêtre est par exemple définie par un contour fermé dont une portion du bord définit la piste de roulement solidaire du support et coopérant avec cet organe de roulement.

Le déplacement de chaque corps pendulaire par rapport au support peut être guidé par au moins deux organes de roulement, notamment exactement deux organes de roulement. Dans ce cas, chaque organe de roulement exerce un serrage axial sur l'une au moins des masses pendulaires du corps pendulaire. Par exemple, chaque organe de roulement exerce uniquement un serrage axial sur la première masse pendulaire du corps pendulaire, sans exercer de serrage axial sur la deuxième masse pendulaire du corps pendulaire. En variante, chaque organe de roulement exerce un serrage axial sur chacune des masses pendulaires du corps pendulaire. En variante encore, seul l'un des organes de roulement guidant le déplacement du corps pendulaire exerce un serrage axial sur la ou les masses pendulaires de ce corps pendulaire.

Chaque organe de roulement exerce par exemple sur le corps pendulaire avec lequel il interagit un serrage axial de 0,5 N. La force de serrage globale, exprimée en Newtons, exercée par tous les organes de roulement guidant le déplacement d'un corps pendulaire par rapport au support peut être comprise entre 20% et 110% du poids, exprimé en Newtons, de ce corps pendulaire. De préférence, cette force de serrage est comprise entre 50% et 90% du poids du corps pendulaire, notamment comprise entre 60% et 80% de ce poids.

Dans tout ce qui précède, le dispositif peut comprendre au moins une pièce d'interposition dont au moins une partie est axialement disposée entre le support et une masse pendulaire du corps pendulaire. La pièce d'interposition est par exemple fixée sur une masse pendulaire ou le support ou formée par un revêtement déposé sur une masse pendulaire ou sur le support. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires, étant notamment fixées sur les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, chaque corps pendulaire peut comprendre au moins un organe d'amortissement de butée contre le support. Chacun de ces organes d'amortissement de butée peut alors venir en contact avec le support pour amortir la butée du corps pendulaire contre ce dernier, par exemple :
- à l'issue d'un déplacement dans le sens trigonométrique de ce corps pendulaire depuis la position de repos pour filtrer une oscillation de torsion, et/ou
- à l'issue d'un déplacement dans le sens non-trigonométrique de ce corps pendulaire depuis la position de repos pour filtrer une oscillation de torsion, et/ou
- en cas de chute radiale du corps pendulaire, par exemple lors de l'arrêt du moteur thermique du véhicule.

Le cas échéant, chaque organe d'amortissement de butée peut amortir la butée du corps pendulaire contre le support à l'issue d'un déplacement dans le sens trigonométrique depuis la position de repos, à l'issue d'un déplacement dans le sens non-trigonométrique depuis la position de repos mais également en cas de chute radiale du corps pendulaire. Un même organe d'amortissement de butée peut ainsi être associé à un corps pendulaire pour amortir tous les contacts précités entre le corps pendulaire et le support.

Chaque organe d'amortissement de butée peut être dédié à un organe de liaison du corps pendulaire et porté par ce dernier. Chaque organe d'amortissement de butée peut alors présenter une forme cylindrique d'axe parallèle à l'axe de rotation du support.

Chaque organe d'amortissement de butée peut présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, un double embrayage à sec ou humide, un simple embrayage humide, un composant de groupe motopropulseur hybride, ou un disque de friction d'embrayage, comprenant un dispositif d'amortissement pendulaire tel que défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention a encore pour objet, selon un autre de ses aspects, un groupe motopropulseur de véhicule comprenant :
- un moteur thermique de propulsion du véhicule, notamment à deux, trois ou quatre cylindres, et
- un composant pour système de transmission tél que défini ci-dessus.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un dispositif d'amortissement pendulaire selon un exemple de mise en oeuvre de l'invention,
- la figure 2 de façon partielle un premier exemple de mise en oeuvre de l'invention, lorsque le dispositif est au repos,
- la figure 3 est une vue en coupe selon III-III de la figure 2,
- les figures 4 à 6 représentent de façon schématique trois variantes de rondelle par rapport à celle représentée sur la figure 2, et
- la figure 7 représente, similairement à la figure 2, de façon partielle un deuxième exemple de mise en oeuvre de l'invention, lorsque le dispositif est au repos.

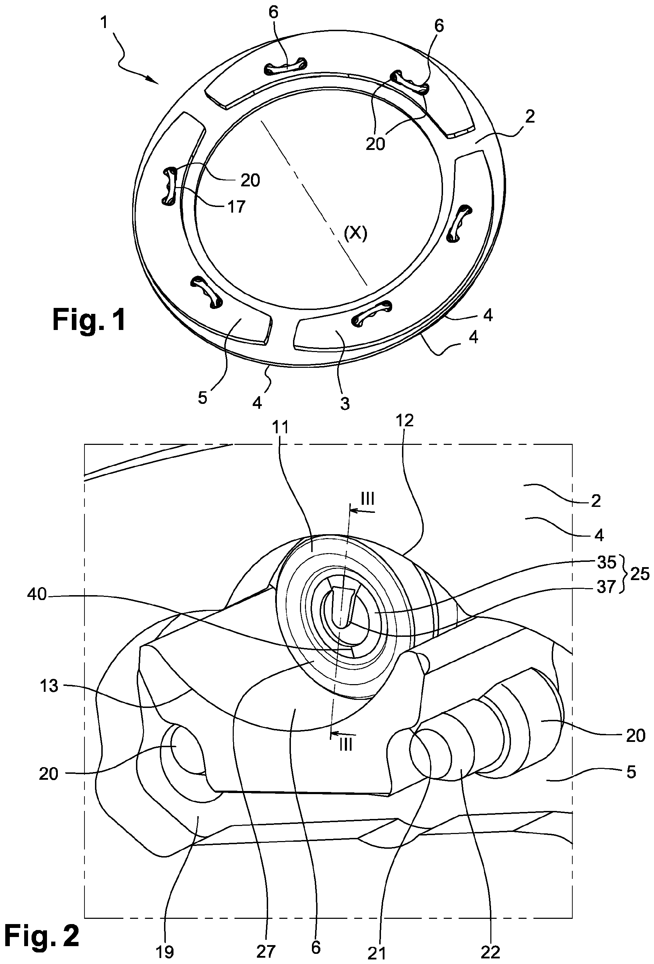

On a représenté sur la figure 1 un dispositif d'amortissement 1 pendulaire.

Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque de friction d'embrayage.

Ce composant peut faire partie d'un groupe motopropulseur d'un véhicule automobile, ce groupe comprenant un moteur thermique notamment à deux, trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Selon les exemples de mise en oeuvre de l'invention qui vont être décrits ultérieurement, le support 2 est unique. On observe par ailleurs sur la figure 1 que trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie,
- un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage. Le support peut encore être autre, par exemple un flasque du composant.

Dans l'exemple considéré, le support 2 présente globalement une forme d'anneau comportant deux côtés opposés 4 qui sont ici des faces planes.

Comme on peut notamment le voir sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

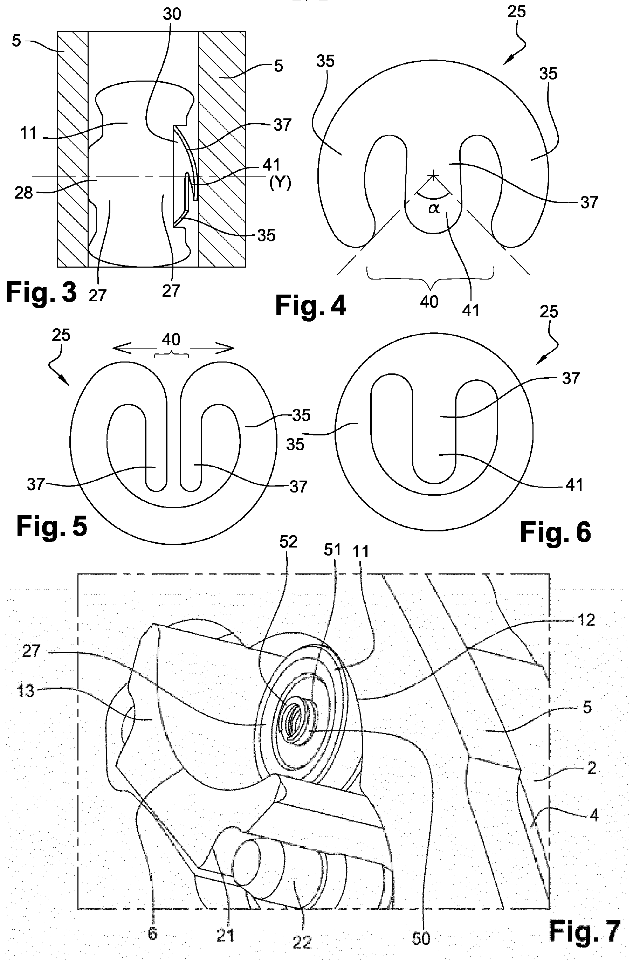

Sur les figures 2 et 7, l'une des masses pendulaires 5 n'est pas représentée, de manière à mieux voir le support 2. Sur la figure 3, le support 2 n'est pas représenté tandis que les deux masses pendulaires 5 du corps pendulaire 3 le sont.

Les organes de liaison 6, encore appelés « entretoises », sont dans l'exemple considéré décalés angulairement.

Dans l'exemple de la figure 1, chaque organe de liaison 6 est solidarisé aux masses pendulaires 5 en étant emmanché en force via chacune de ses extrémités dans une ouverture 17 ménagée dans une des masses pendulaires 5. Dans des variantes non représentées, chaque organe de liaison 6 peut être vissé sur chaque masse pendulaire 5, ou chaque extrémité d'un organe de liaison 6 est solidarisée à une des masses pendulaires 5 par soudure.

Le dispositif 1 comprend encore des organes de roulement 11 guidant le déplacement des corps pendulaires 3 par rapport au support 2. Les organes de roulement 11 sont ici des rouleaux présentant ou non plusieurs diamètres successifs différents. Chaque organe de roulement 11 présente ainsi un axe longitudinal Y parallèle à l'axe de rotation X du support 2.

Dans l'exemple décrit, le mouvement par rapport au support 2 de chaque corps pendulaire 3 est guidé par deux organes de roulement 11.

Chaque organe de roulement 11 est reçu dans une fenêtre 19 ménagée dans le support 2. Dans les exemples considérés, chaque fenêtre 19 ne reçoit qu'un seul organe de roulement 11.

Chaque organe de roulement coopère d'une part avec une piste de roulement 12 solidaire du support 2 et qui est ici formée par une portion du bord de la fenêtre 19, et d'autre part avec une piste de roulement 13 solidaire du corps pendulaire 3 et définie par une portion du bord radialement extérieur de l'organe de liaison 6.

Le dispositif 1 comprend encore des organes d'amortissement de butée 20 qui sont visibles sur les figures 2 et 7. Chaque organe de liaison 6 est dans les exemples décrits associé à deux organes d'amortissement de butée 20 distincts. Chacun de ces organes d'amortissement de butée 20 présente ici une forme allongée selon un axe parallèle à l'axe Y. Chaque organe d'amortissement de butée 20 est ici reçu dans un dégagement 21 formé dans un bord latéral de l'organe de liaison 6. Chaque organe d'amortissement de butée 20 s'étend entre deux extrémités 22, chacune de ces extrémités 22 étant reçue de façon solidaire dans un logement non représenté de la masse pendulaire 5 axialement en regard de cette extrémité 22, de manière à solidariser l'organe d'amortissement de butée 20 au corps pendulaire 3.

L'un des organes d'amortissement de butée 20 est positionné de manière à amortir les chocs liés à la venue en butée du corps pendulaire 3 contre le support 2 à l'issue d'un déplacement dans le sens trigonométrique depuis la position de repos des figures 2 et 7 pour filtrer une oscillation de torsion. L'autre organe d'amortissement de butée 20 est positionné de manière à amortir les chocs liés à la venue en butée du corps pendulaire 3 contre le support 2 à l'issue d'un déplacement dans le sens non trigonométrique depuis la position de repos des figures 2 et 7 pour filtrer une oscillation de torsion.

Chaque organe d'amortissement de butée 20 est dans l'exemple considéré réalisé en caoutchouc.

Dans des variantes, les organes d'amortissement de butée peuvent être autres. Deux organes d'amortissement de butée 20 associés à un même organe de liaison 6 peuvent ainsi être reliés entre eux par un pont de matière. En variante, un unique organe d'amortissement de butée est associé à un même organe de liaison 6, cet unique organe d'amortissement de butée amortissant les chocs entre le corps pendulaire 3 et le support 2 :
- à l'issue d'un déplacement dans le sens trigonométrique de ce corps pendulaire 3 depuis la position de repos pour filtrer une oscillation de torsion, et
- à l'issue d'un déplacement dans le sens non trigonométrique de ce corps pendulaire depuis la position de repos pour filtrer une oscillation de torsion, et
- en cas de chute radiale du corps pendulaire, par exemple lors de l'arrêt du moteur thermique du véhicule.

On va maintenant décrire plus précisément en référence aux figures 2 à 7 deux exemples de mise en oeuvre de l'invention permettant qu'un serrage axial soit exercé sur chaque corps pendulaire 3 afin d'entraver l'action de la gravité sur ce corps pendulaire 3.

Dans les exemples de mise en oeuvre qui vont être décrits, le serrage axial est exercé sur chaque corps pendulaire 3 du dispositif 1 par les deux organes de roulement 11 guidant le déplacement par rapport au support 2 de ce corps pendulaire 3.

Selon le premier exemple de mise en oeuvre, décrit en référence aux figures 2 à 6, ce serrage axial est exercé via une rondelle élastiquement déformable 25. Une seule rondelle élastiquement déformable 25 est ici montée sur un organe de roulement 11. Cet organe de roulement 11 présente alors deux faces d'extrémité axiale 27 de forme différente, comme on peut le voir sur la figure 3. L'une de ces faces d'extrémité axiale 27 est ici creuse de manière à définir un logement 30 accueillant la rondelle élastiquement déformable 25, tandis que l'autre face d'extrémité axiale 27 de l'organe de roulement 11 est bombée, présentant une protubérance 28 venant en appui axial contre la masse pendulaire 5 axialement en regard de cette autre face d'extrémité axiale 27.

Dans cet exemple, l'autre face d'extrémité axiale 27 n'accueille pas de rondelle élastiquement déformable 25.

La rondelle élastiquement déformable 25 est dans cet exemple réalisée en acier allié pour ressort. La rondelle 25 peut se déformer dans un plan perpendiculaire à l'axe Y selon les flèches de la figure 5 lors de sa mise en place dans le logement 30, de manière à être maintenue dans ce logement 30 une fois revenue à sa forme initiale.

Selon les quatre variantes de rondelle 25 représentées sur les figures 2, 4, 5 et 6, la rondelle élastiquement déformable 25 comprend :
- une portion radialement extérieure annulaire 35 s'étendant circonférentiellement, et
- au moins une patte 37 s'étendant depuis la portion radialement extérieure annulaire 35 vers l'intérieur de la rondelle et faisant saillie axialement par rapport à cette portion radialement extérieure annulaire 35.

Dans les exemples des figures 2, 4 et 5, la portion radialement extérieure annulaire 35 s'étend de façon discontinue, étant fendue. Comme on peut le voir, différentes valeurs d'étendue circonférentielle α de la fente 40 sont possibles. Dans l'exemple de la figure 2, la fente 40 s'étend sur un angle α mesuré entre ses deux extrémités depuis le centre de la portion extérieure annulaire 35 de la rondelle 25 qui est très faible, étant par exemple compris entre 10° et 40°. En variante, la fente peut être ménagée sur un angle plus important, par exemple sur un angle α de l'ordre de 80°, comme représenté sur la figure 4.

Dans les exemples des figures 2 et 4, la patte 37 est sensiblement rectiligne et son extrémité libre 41 est en regard de la fente 40.

Dans l'exemple de la figure 5, la fente 40 est définie entre deux retours s'étendant vers l'intérieur de la rondelle élastiquement déformable 25 depuis la portion radialement extérieure annulaire 35. Chacun de ces retours définit alors une patte 37.

Dans l'exemple de la figure 6, la portion radialement extérieure 35 de la rondelle 25 s'étend de façon continue, étant dépourvu de fente. La rondelle élastiquement déformable 25 est par exemple alors une rondelle Belleville.

Dans chacun des exemples décrits en référence aux figures 2 à 6, la ou les pattes 37 portées par un organe de roulement 11 viennent en appui élastique axial contre une masse pendulaire 5 du corps pendulaire 3, de manière à exercer un serrage axial sur ce corps pendulaire 3.

On va maintenant décrire en référence à la figure 7 un deuxième exemple de mise en oeuvre de l'invention. Dans cet exemple, un logement traversant 50 est ménagé dans chaque organe de roulement 11, entre les deux faces d'extrémité axiale 27 de cet organe de roulement 11. Ce logement 50 reçoit un ressort 51 dont chaque extrémité 52 fait saillie axialement hors du logement 50. Chaque extrémité 52 du ressort 51 forme selon ce deuxième exemple de mise en oeuvre un élément élastique d'appui axial sur une masse pendulaire 5 du corps pendulaire 3, permettant d'exercer un serrage axial sur ce corps pendulaire 3.

Dans tout ce qui précède, le serrage axial peut être exercé sur le corps pendulaire pour toute position de ce dernier par rapport au support 2, c'est-à-dire qu'il n'existe alors aucune plage de déplacement de ce corps pendulaire 3 par rapport au support 2 dans laquelle aucun serrage axial n'est exercé par les organes de roulement 11 guidant le déplacement de ce corps pendulaire 3 sur ce dernier. Dans tout ce qui précède, le serrage axial peut être de valeur constante. En variante, la valeur du serrage axial peut varier au cours du déplacement du corps pendulaire 3 par rapport au support 2.

En variante, le serrage axial n'est exercé sur le corps pendulaire que dans certaines positions du corps pendulaire 3 par rapport au support, c'est-à-dire qu'il existe une ou plusieurs plages de déplacement dans laquelle aucun serrage axial n'est exercé par les organes de roulement 11 guidant le déplacement par rapport au support 2 de ce corps pendulaire 3.

Dans tout ce qui précède, la force de serrage globale, exprimée en Newtons, exercée par tous les organes de roulement guidant le déplacement d'un corps pendulaire par rapport au support peut être comprise entre 20% et 110% du poids, exprimé en Newtons, de ce corps pendulaire. De préférence, cette force de serrage est comprise entre 50% et 90% du poids du corps pendulaire, notamment comprise entre 60% et 80% de ce poids. Pour obtenir une telle force de serrage, on peut jouer sur la valeur du coefficient de frottement intervenant lors de ce serrage.

L'invention n'est pas limitée aux exemples qui viennent d'être décrits.

Par exemple, selon le premier exemple de mise en oeuvre, la rondelle 25 peut ne pas être entièrement élastiquement déformable, seule la patte 37 ou seules les pattes 37 présentant ce caractère élastiquement déformable.

## Revendications

1. Dispositif (1) d'amortissement pendulaire, comprenant :
- un support (2) apte à se déplacer en rotation autour d'un axe (X),
- au moins un corps pendulaire (3) comprenant : une première et une deuxième masses pendulaires (5) espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et au moins un organe de liaison (6) de la première et de la deuxième masses pendulaires (5) appariant lesdites masses, et
- au moins un organe de roulement (11) guidant le déplacement du corps pendulaire (3) par rapport au support (2), l'organe de roulement (11) coopérant d'une part avec une piste de roulement (12) solidaire du support (2) et d'autre part avec une piste de roulement (13) solidaire du corps pendulaire (3) et définie par l'organe de liaison
et **caractérisé en ce que** l'organe de roulement (11) exerce une force de serrage axial sur l'une au moins des masses pendulaires (5) pendant le déplacement de cette masse pendulaire (5) par rapport au support (2).

2. Dispositif selon la revendication 1, l'organe de roulement (11) exerçant une force de serrage axial sur chaque masse pendulaire (5) du corps pendulaire (3) pendant le déplacement du corps pendulaire (3) par rapport au support (2).

3. Dispositif selon la revendication 1 ou 2, l'organe de roulement (11) portant sur l'une au moins de ses faces d'extrémité axiale (27) un élément élastique d'appui axial (37, 52) exerçant la force de serrage axial sur la masse pendulaire (5).

4. Dispositif selon la revendication 3, comprenant une rondelle (25) montée sur la face d'extrémité axiale (27) de l'organe de roulement (11), l'élément élastique d'appui axial étant formé par au moins une patte (27) de cette rondelle (25).

5. Dispositif selon la revendication 4, la rondelle (25) étant élastiquement déformable, de manière à permettre son montage dans un logement (30) ménagé dans la face d'extrémité axiale (27) de l'organe de roulement (11).

6. Dispositif selon la revendication 5, la rondelle (25) comprenant une portion radialement extérieure annulaire (35) s'étendant circonférentiellement depuis laquelle s'étend la patte (37) vers l'intérieur de la rondelle (25).

7. Dispositif selon la revendication 6, la portion radialement extérieure annulaire (35) de la rondelle (25) étant fendue.

8. Dispositif selon la revendication 3, l'organe de roulement (11) étant creux de manière à définir un logement (50) dans lequel est reçu un ressort (51), l'une au moins des extrémités (52) de ce ressort (51) formant l'élément élastique d'appui axial.

9. Dispositif selon la revendication 8, le logement (50) ménagé dans l'organe de roulement (11) étant traversant, de sorte que chaque extrémité (52) du ressort (51) reçu dans ce logement (50) forme un élément élastique d'appui axial sur l'une des masses pendulaires respectives (5) du corps pendulaire (3).

10. Composant pour système de transmission d'un véhicule automobile, le composant étant notamment un double volant amortisseur, un convertisseur de couple hydrodynamique ou un disque d'embrayage à friction, comprenant un dispositif d'amortissement pendulaire (1) selon l'une quelconque des revendications 1 à 9.

11. Groupe motopropulseur de véhicule comprenant :
- un moteur thermique de propulsion du véhicule à deux cylindres, et
- un composant pour système de transmission selon la revendication 10.

## Patentansprüche

1. Vorrichtung (1) zur Pendeldämpfung, welche umfasst:
- einen Halter (2), der geeignet ist, eine Drehbewegung um Achse (X) auszuführen;
- wenigstens einen Pendelkörper (3), welcher umfasst: eine erste und eine zweite Pendelmasse (5), die axial voneinander beabstandet und bezüglich des Halters (2) beweglich sind, wobei die erste Pendelmasse (5) axial auf einer ersten Seite (4) des Halters (2) angeordnet ist und die zweite Pendelmasse (5) axial auf einer zweiten Seite (4) des Halters (2) angeordnet ist, und wenigstens ein Organ zur Verbindung (6) der ersten und der zweiten Pendelmasse (5), das diese Massen zu einem Paar vereinigt, und
- wenigstens einen Wälzkörper (11), der die Bewegung des Pendelkörpers (3) bezüglich des Halters (2) führt, wobei der Wälzkörper (11) einerseits mit einer Laufbahn (12), die mit dem Halter (2) fest verbunden ist, und andererseits mit einer Laufbahn (13), die mit dem Pendelkörper (3) fest verbunden ist und durch das Verbindungsorgan definiert ist, zusammenwirkt,
**dadurch gekennzeichnet, dass** der Wälzkörper (11) eine axiale Spannkraft auf wenigstens eine der Pendelmassen (5) während der Bewegung dieser Pendelmasse (5) bezüglich des Halters (2) ausübt.

2. Vorrichtung nach Anspruch 1, wobei der Wälzkörper (11) eine axiale Spannkraft auf jede Pendelmasse (5) des Pendelkörpers (3) während der Bewegung des Pendelkörpers (3) bezüglich des Halters (2) ausübt.

3. Vorrichtung nach Anspruch 1 oder 2, wobei der Wälzkörper (11) auf wenigstens einer seiner axialen Endflächen (27) ein sich axial abstützendes elastisches Element (37, 52) trägt, das die axiale Spannkraft auf die Pendelmasse (5) ausübt.

4. Vorrichtung nach Anspruch 3, welche eine Scheibe (25) umfasst, die auf der axialen Endfläche (27) des Wälzkörpers (11) angebracht ist, wobei das sich axial abstützende elastische Element von wenigstens einer Lasche (27) dieser Scheibe (25) gebildet wird.

5. Vorrichtung nach Anspruch 4, wobei die Scheibe (25) elastisch verformbar ist, um so ihre Anbringung in einer Aufnahme (30) zu ermöglichen, die in der axialen Endfläche (27) des Wälzkörpers (11) ausgebildet ist.

6. Vorrichtung nach Anspruch 5, wobei die Scheibe (25) einen ringförmigen radial äußeren Abschnitt (35) umfasst, der sich in Umfangsrichtung erstreckt und von dem aus sich die Lasche (37) zum Inneren der Scheibe (25) hin erstreckt.

7. Vorrichtung nach Anspruch 6, wobei der ringförmige radial äußere Abschnitt (35) der Scheibe (25) geschlitzt ist.

8. Vorrichtung nach Anspruch 3, wobei der Wälzkörper (11) hohl ist, um so eine Aufnahme (50) zu definieren, in welcher eine Feder (51) aufgenommen ist, wobei wenigstens eines der Enden (52) dieser Feder (51) das sich axial abstützende elastische Element bildet.

9. Vorrichtung nach Anspruch 8, wobei die Aufnahme (50), die in dem Wälzkörper (11) ausgebildet ist, durchgehend ist, und zwar derart, dass jedes in dieser Aufnahme (50) aufgenommene Ende (52) der Feder (51) ein sich auf einer der jeweiligen Pendelmassen (5) des Pendelkörpers (3) axial abstützendes elastisches Element bildet.

10. Komponente für ein Kraftübertragungssystem eines Kraftfahrzeugs, wobei die Komponente insbesondere ein Doppeldämpfungsschwungrad, ein hydrodynamischer Drehmomentwandler oder eine Kupplungsreibscheibe ist und eine Vorrichtung zur Pendeldämpfung (1) nach einem der Ansprüche 1 bis 9 umfasst.

11. Kraftfahrzeugantriebsstrang, welcher umfasst:
- einen Antriebsverbrennungsmotor des Fahrzeugs mit zwei Zylindern, und
- eine Komponente für ein Kraftübertragungssystem nach Anspruch 10.

## Claims

1. A pendular damping device (1), comprising:
- a support (2) capable of moving rotationally about an axis (X),
- at least one pendular body (3) comprising: a first and a second pendular mass (5) spaced apart
axially relative to one another and mobile relative to the support (2), the first pendular mass (5) being arranged axially on a first side (4) of the support (2) and the second pendular mass (5) being arranged axially on a second side (4) of the support (2), and at least one member (6) linking the first and the second pendular masses (5) pairing said masses, and
- at least one rolling member (11) guiding the movement of the pendular body (3) relative to the
support (2), the rolling member (11) cooperating on the one hand with a rolling track (12) integral to the support (2) and on the other hand with a rolling track (13) integral to the pendular body (3) and defined by the link member (6),
the rolling member (11) exerting an axial gripping force on at least one of the pendular masses (5) during the movement of this pendular mass (5) relative to the support (2) .

2. The device as claimed in claim 1, the rolling member (11) exerting a gripping force on each pendular mass (5) of the pendular body (3) during the movement of the pendular body (3) relative to the support (2).

3. The device as claimed in claim 1 or 2, the rolling member (11) bearing, on at least one of its axial end faces (27), an axial-bearing elastic element (37, 52) exerting the axial gripping force on the pendular mass (5).

4. The device as claimed in claim 3, comprising a washer (25) mounted on the axial end face (27) of the rolling member (11), the axial-bearing elastic element being formed by at least one lug (27) of this washer (25).

5. The device as claimed in claim 4, the washer (25) being elastically deformable, so as to allow it to be fitted in a housing (30) formed in the axial end face (27) of the rolling member (11).

6. The device as claimed in claim 5, the washer (25) comprising a radially outer annular portion (3
5) extending circumferentially from which the lug (37) extends toward the interior of the washer (25).

7. The device as claimed in claim 6, the radially outer annular portion (35) of the washer (25) being slotted.

8. The device as claimed in claim 3, the rolling member (11) being hollow so as to define a housing (50) in which a spring (51) is received, at least one of the ends (52) of this spring (51) forming the axial-bearing elastic element.

9. The device as claimed in claim 8, the housing (50) formed in the rolling member (11) being a through-housing, such that each end (52) of the spring (51) received in this housing (50) forms anaxial-bearing elastic element bearing axially on one of the respective pendular masses (5) of the pendular body (3).

10. A component for a transmission system of a motor vehicle, the component being in particular a double damping flywheel, a hydrodynamic torque converter or a friction clutch disk, comprising
a pendular damping device (1) as claimed in any one of claims 1 to 9.

11. A vehicle power train comprising:
- a two-cylinder heat engine propelling the vehicle, and
- a component for a transmission system as claimed in claim 10.
